Europäisches Patentamt

European Patent Office

Office européen des brevets

(19)

(11) Publication number: **0 150 516**
**B1**

(12) **EUROPEAN PATENT SPECIFICATION**

(45) Date of publication of patent specification: **09.08.89**

(51) Int. Cl.⁴: **A 47 J 37/12**, A 47 J 36/38, F 24 C 15/20

(21) Application number: **84200094.5**

(22) Date of filing: **25.01.84**

(54) **Electrical cooking appliance including gas suction means.**

(43) Date of publication of application:
**07.08.85 Bulletin 85/32**

(45) Publication of the grant of the patent:
**09.08.89 Bulletin 89/32**

(84) Designated Contracting States:
**CH DE FR GB IT LI NL**

(56) References cited:
**DE-A-2 309 563**
**FR-A-1 568 985**
**GB-A- 370 160**
**GB-A-1 452 266**
**US-A-2 546 464**
**US-A-2 562 839**

(73) Proprietor: **ITT INDUSTRIES BELGIUM S.A.**
**Place Rogier, 3**
**B-1000 Bruxelles (BE)**
(84) **NL**

(73) Proprietor: **ITT INDUSTRIES INC.**
**320 Park Avenue**
**New York, NY 10022 (US)**
(84) **CH DE FR GB IT LI**

(72) Inventor: **Boyen, Lodewijk Josef Theofiel**
**Drève de Waroux**
**B-4430 Alleur (BE)**

(74) Representative: **De Palmenaer, Roger et al**
**Bureau Vander Haeghen 63, avenue de la Toison d'Or**
**B-1060 Bruxelles (BE)**

Courier Press, Leamington Spa, England.

## Description

The present invention relates to an electrical cooking appliance including a rotating fan or blower positioned in the lower part of the appliance and creating a draught exhausting the fumes from a cooking vessel through a substantially vertical suction channel in the rear part of the appliance with an inlet positioned outside the upper rim of the vessel and connected through the fan or blower to an exhaust channel in the rear part of the appliance with an outlet reached through a substantially vertical part.

A gas cooking range of the above type is disclosed in GB—A—370160, the general object being to cook fish and chip potatoes in eating places. As a result, the range is of the industrial or semi-industrial type where space is not particularly at a premium in contradistinction with modern compact electrical domestic deep fryers used in the kitchen. Thus, such a gas cooking range has the blower positioned outside the housing of the cooking stove together with a horizontal collecting pipe on the induction side and with a mainly vertical pipe on the delivery side of the blower. The collecting pipe is centered on the axis of the blower and is parallel to the rear wall of the stove.

A general object of the invention is to realise an electrical cooking appliance as defined but with a built-in ventilating unit capable of exhausting fumes generated by the cooking and using a minimum of extra volume.

In accordance with the main characteristic of the invention, the fan or blower and the suction and exhaust channels are all located near the inside rear wall of the appliance with the exhaust channel including a substantially horizontal part between the fan or blower and the vertical part and with the axis of the rotating fan or blower perpendicular to the rear wall.

Such a location of the blower and of the suction and exhaust channels allow incorporation in a domestic deep fryer of the type disclosed in EP—A—0008838 which electrical appliance includes both a removable odour filter and a viewing window to observe cooking operations with the lid closed. A compact construction can be achieved with all the elements inside the overall housing. Whereas the electrical appliance referred to is characterised by a double window to improve visibility despite the generation of very hot fumes, the present exhaust arrangement has been found to enable satisfactory viewing with a single window of simpler construction. The proposed appliance allows unhindered insertion and removal of the frying basket into and out of the vat. With both the inlet and outlet channels on the two sides of a radial fan following substantially adjacent vertical paths at the rear of the appliance, a generally flat cartridge of activated charcoal, used hitherto in a horizontal position in the lid of domestic deep fryers, may now occupy a vertical position next to the rear wall of the appliance and the exhaust channel may be configured with an expanded cross-section towards the outlet in order to reduce the velocity of the exhaust. Conversely, on the side of the fan, the exhaust outlet has a gradually diminishing cross-section towards the top of the appliance through which the exhaust fumes are finally projected, and this is to induce the fumes to pass through the filter cartridge.

A detailed embodiment of the invention will now be described in relation with the drawings accompanying the description and which schematically represent:

Fig. 1, a plan view of the deep fryer in accordance with the invention, interrupted lines being used to represent the vat and the radial fan assembly;

Fig. 2, a vertical cross-section of the deep fryer along line A—B of Fig. 1;

Fig. 3, a vertical cross-sectional view of the deep fryer along lines C—D of Fig. 1; and

Fig. 4, a vertical cross-sectional view of the deep fryer along line E—F of Fig. 1.

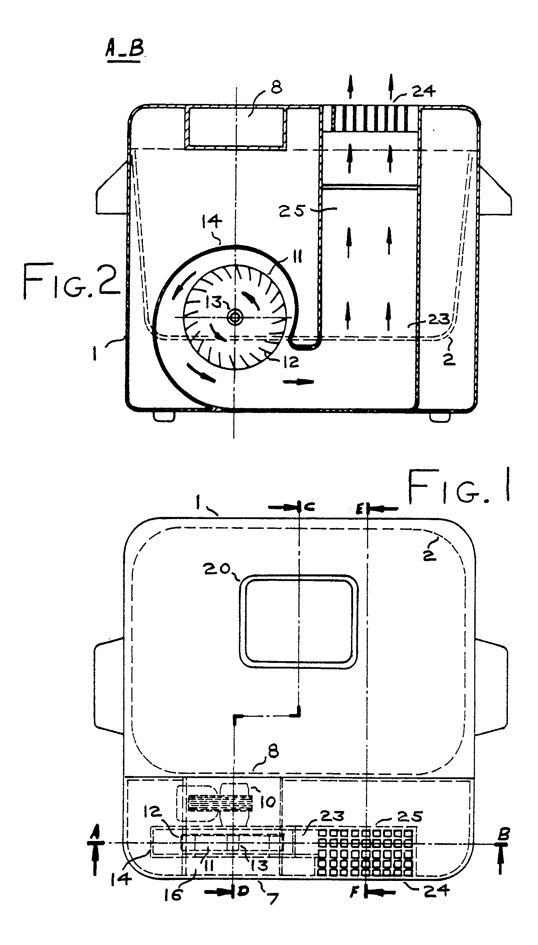

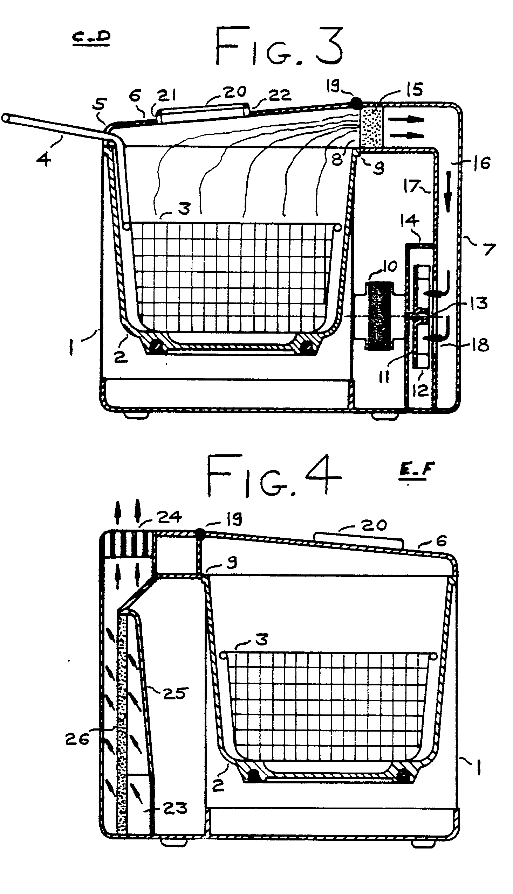

The domestic deep fryer shown schematically includes a main housing 1, generally rectangular both in the plan view of Fig. 1, and in the cross-section vertical views of Figs. 2 to 4. As shown by Fig. 1, the greater part of the overall surface of the appliance 1 is occupied by the vat 2 in which, as shown in Figs. 3 and 4, a wire-mesh basket 3 may be inserted for a cooking operation. It is provided with a handle 4 which is only shown in Fig. 3 and contrary to the special handle design disclosed in the European patent application published under No. 00 08838, the handle 4 can be of a simple design integral with the basket 3 as shown in Fig. 3. Indeed, it is now possible to foresee an opening 5 in the lid 6 which enables the handle 4 to protrude outside the appliance and this without more elaborate measures, as in the above European patent application, in order to avoid a substantial amount of fumes escaping through the opening around the handle.

This is now avoided, as particularly shown in Fig. 3, due to the fumes generated by a cooking operation being drawn away from the handle 4 at the front of the appliance 1 towards the rear wall 7, a suitable rectangular inlet 8 (Figs. 2 and 3) being provided right above the upper rim 9 of the vat 2 on the opposite side of the handle.

Naturally, the simple handle 4 shown in Fig. 3 could nevertheless be replaced by such arrangements as disclosed for instance in the British patent 1 352 653 affording an easier straining operation and enabling the handle to be folded back on the basket to facilitate storage. But such improvements involving a handle articulated on the basket and able to be latched thereto to secure a rigid assembly, particularly when the basket is out of the appliance, need not involve traditional measures enabling such a handle and basket arrangement to be associated with the appliance by means of a special bracket (as disclosed in the European patent application) and designed in particular to avoid substantial leakage of fumes around the handle.

As shown particularly in Figs. 1 to 3, the radial fan assembly enabling suction of the fumes through the inlet 8 consists of a motor 10 inducing the rotation of a wheel 11, with vanes 12, around the axle 13 and inside a spiral-shaped casing 14. The suction produced by this arrangement draws the fumes through inlet 8, filter 15 and the inlet channel 16 having a first horizontal part followed by a vertical one leading to the radial fan assembly. The inlet channel is generally defined by the outside cover of the appliance 1 and particularly the rear wall 7, as well as by an inside wall 17 which is foreseen with a suitable opening 18 towards the fan assembly.

Filter 15 may be of the metallic type and for instance of the sandwich grid construction disclosed in the European patent application published under No. 0026958. With the lid 6 being hinged in 19, such a permanent filter 15 is readily accessible when the lid is opened so that it can be removed for cleaning. Thus, lid 6 no longer includes a housing for such a filter cartridge as in the European published applications mentioned and moreover, the rectangular viewing window 20 can be of a simpler design in view of the fume extraction means used. Only a single window raised as shown is necessary instead of a double window with a special construction to allow its mounting inside the lid without the escape of fumes. Instead, side openings such as 21 and 22 (Fig. 3) can be provided, such air inlets helping to avoid fogging the window 20. These inlets may be adjustable.

Once propelled by the wheel 11 inside the spiral-shaped casing 14, the extracted fumes in the outlet channel 23 initially follow a horizontal path at the bottom of the appliance 1 and thereafter a vertical one towards the perforated outlet 24. Just as for the inlet channel, the outlet channel is partly defined by the outside cover of the appliance 1 and more particularly its rear wall 7. Additionally, an inside wall 25 (Figs. 2 and 4) completes the outlet channel and as particularly shown in Fig. 4, it is partly inclined towards the rear wall 7 so that the cross-sectional area of the outlet channel is reduced in the direction of the outlet 24. The result is to facilitate the exit of the fumes through a vertically located second filter 26 which can be a suitable cartridge of activated charcoal and as conventionally used in the lids of domestic frying appliances. On the other hand, after passing through this filter 26, the fumes will go through a channel whose cross-sectional area finally increases as shown in Fig. 4 before reaching the outlet 24. This will ensure reduced velocity for the fumes at the exit and additionally, since the latter are mixed with air, they are less hot and accordingly less dangerous for the user.

Nevertheless, instead of the fixed grid outlet 24 as shown, it would still be possible to have one which could be set in any desired direction. Alternatively, as disclosed for instance in the French patent No. 1 050 184, a suitable duct might be used for the outlet in order to evacuate the fumes through a smoke hood provided in the kitchen. The fumes at the outlet could also be passed through water as disclosed for instance in the US patent No. 3 842 725.

Just as metallic filter 15 can readily be cleaned when opening the lid 6, at least parts of the vertical rear wall 7 of the appliance 1 can be made removable in order to replace the activated charcoal filter 26 and eventually clean the radial fan wheel 11 with part of the inside vertical wall 17 being also removable for that purpose.

Naturally, the desired appliance with its new way to evacuate the fumes in a domestic deep fryer of normal size and without hindering movements of the frying basket, also implies that no inside pressure is necessary in order to force the fumes through the resistance presented by the filters. This is particularly advantageous for cooking preparations which are unfavourably affected by water or oil saturation. Also, the absence of such a side pressure means that the strong liquid condensation which occurs, particularly when the lid is opened, is no longer present whereby special means to collect condensation liquids to avoid droplets falling back inside the frying vat, as disclosed for instance in the US patent No. 3 463 077, are no longer necessary.

Various modifications and variants with respect to those shown and described in the preferred embodiment of the invention are of course possible. For instance, the window 20 could eventually be dispensed with since a mere opening in the lid 6 would afford visibility while the user would still be protected from hot fumes since these are laterally evacuated through the inlet 8. Also, by providing such inlets around the upper rim 9 of the vat 1, the fumes could be evacuated all around the periphery of the vat and the lid 6 dispensed with.

## Claims

1. Electrical cooking appliance including a rotating fan or blower (10, 11, 12) positioned in the lower part of the appliance and creating a draught exhausting the fumes from a cooking vessel (2) through a substantially vertical suction channel (16) in the rear part of the appliance with an inlet (8) positioned outside the upper rim (9) of the vessel and connected through the fan or blower (10, 11, 12) to an exhaust channel (23) in the rear part of the appliance with an outlet (24) reached through a substantially vertical part, characterised in that the fan or blower and the suction and exhaust channels are all located near the inside rear wall of the appliance with the exhaust channel including a substantially horizontal part between the fan or blower and the vertical part and with the axis of the rotating fan or blower perpendicular to the rear wall.

2. Electrical cooking appliance as claimed in claim 1, characterised in that the outlet (24) occupies part of the horizontal upper surface of the appliance.

3. Electrical cooking appliance as claimed in claim 1, characterised in that a filter (15) is located at the inlet (8) of the suction channel.

4. Electrical cooking appliance as claimed in claim 1, characterised in that a filter (26) is located in the exhaust channel (23).

5. Electrical cooking appliance as claimed in claims 3 or 4, characterised in that the filter (15, 26) main surface is substantially vertical.

6. Electrical cooking appliance as claimed in claims 4 and 5, characterised in that the filter (26) in the exhaust channel (23) is positioned between two substantially parallel walls (7, 25) part of the channel, with the cross-section of the channel on the side of the fan or blower (10, 11, 12) diminishing in the direction of the outlet (24) whereas that on the side of the outlet increases towards the latter.

7. Electrical cooking appliance as claimed in claim 1, characterised in that it is provided with a lid (6) including a raised viewing window (20) with openings (21, 22) between its surface and that of the lid.

8. Electrical cooking appliance as claimed in claim 1, characterised in that it is provided with a lid (6) including, on the side away from the inlet (8), an opening (5) for the handle (4) of a basket (3) removably positioned in the vessel (2).

**Patentansprüche**

1. Elektrische Kochvorrichtung mit einem im unteren Teil der Vorrichtung angeordneten rotierenden Ventilator oder Gebläse (10, 11, 12), der einen Luftzug erzeugt, welcher die Dämpfe eines Kochgefäßes (2) durch einen im wesentlichen vertikalen Saugkanal (16) im hinteren Teil der Vorrichtung absaugt, einem außerhalb des oberen Randes (9) des Gefäßes angeordneten Einlaß (8), der durch den Ventilator oder das Gebläse (10, 11, 12) mit einem Ausblaskanal (23) im hinteren Teil der Vorrichtung verbunden ist, zu dessen Auslaß (24) ein im wesentlichen vertikaler Teil führt, dadurch gekennzeichnet, daß der Ventilator oder das Gebläse und der Saugkanal und der Ausblaskanal in der Nähe der inneren Rückwand der Vorrichtung angeordnet sind, wobei der Ausblaskanal zwischen dem Ventilator oder dem Gebläse und dem vertikalen Teil einen im wesentlichen horizontalen Teil aufweist und die Achse des rotierenden Ventilators oder des Gebläses senkrecht zur Rückwand steht.

2. Elektrische Kochvorrichtung nach Anspruch 1, dadurch gekennzeichnet, daß der Auslaß (24) einen Teil der horizontalen Oberseite der Vorrichtung einnimmt.

3. Elektrische Kochvorrichtung nach Anspruch 1, dadurch gekennzeichnet, daß ein Filter am Einlaß (8) des Saugkanals angeordnet ist.

4. Elektrische Kochvorrichtung nach Anspruch 1, dadurch gekennzeichnet, daß ein Filter (26) im Ausblaskanal (23) angeordnet ist.

5. Elektrische Kochvorrichtung nach Anspruch 3 oder 4, dadurch gekennzeichnet, daß die Hauptfläche des Filters (15, 26) im wesentlichen vertikal angeordnet ist.

6. Elektrische Kochvorrichtung nach den Ansprüchen 4 oder 5, dadurch gekennzeichnet, daß das Filter (26) im Ausblaskanal (23) zwischen zwei im wesentlichen parallelen Wänden (7, 25), welche Teile des Kanals sind, angeordnet ist, wobei der Querschnitt des Kanals ventilator- oder gebläseseitig (10, 11, 12) in Richtung auf den Auslaß (24) abnimmt, während er auslaßseitig gegen den Ventilator oder das Gebläse zunimmt.

7. Elektrische Kochvorrichtung nach Anspruch 1, dadurch gekennzeichnet, daß ein Deckel (6) vorgesehen ist, der ein erhabenes Sichtfenster (20) mit zwischen dessen Oberfläche und der Oberfläche des Deckels vorgesehenen Öffnungen (21, 22) aufweist.

8. Elektrische Kochvorrichtung nach Anspruch 1, dadurch gekennzeichnet, daß ein Deckel (6) vorgesehen ist, der auf der dem Einlaß (8) abgewandten Seite eine Öffnung (5) für den Griff (4) eines in dem Gefäß entnehmbar angeordneten Korbes (3) aufweist.

**Revendications**

1. Appareil de cuisson électrique comprenant une ventilateur ou soufflante rotatif (10, 11, 12) situé à la partie inférieure de l'appareil et créant un courant évacuant les fumées d'un récipient de cuisson (2) à travers un canal de succion (16) sensiblement vertical dans la partie arrière de l'appareil avec une entrée (8) située à l'extérieur du bord supérieur (9) du récipient et relié par la soufflante ou ventilateur (10, 11, 12) à un canal d'évacuation (23) dans la partie arrière de l'appareil avec une sortie (24) s'étendant dans une partie sensiblement verticale, caractérisé en ce que le ventilateur ou soufflante et les canaux de succion et d'évacuation sont tous situés au voisinage de la paroi intérieure arrière de l'appareil, avec le canal d'évacuation comprenant une partie sensiblement horizontale entre le ventilateur ou soufflante et la partie verticale et avec l'axe de rotation de la soufflante ou ventilateur perpendiculaire à la paroi arrière.

2. Appareil de cuisson électrique comme revendiqué dans la revendication 1, caractérisé en ce que la sortie (24) occupe une partie de la surface supérieure horizontale de l'appareil.

3. Appareil de cuisson électrique comme revendiqué à la revendication 1, caractérisé en ce qu'un filtre (15) est situé à l'entrée (8) du canal de succion.

4. Appareil de cuisson électrique comme revendiqué à la revendication 1, caractérisé en ce qu'un filtre (26) est situé dans le canal d'évacuation (23).

5. Appareil de cuisson électrique comme revendiqué aux revendications 3 ou 4, caractérisé en ce que la surface principale du filtre (15, 26) est sensiblement verticale.

6. Appareil de cuisson électrique comme revendiqué aux revendications 4 et 5, caractérisé en ce que le filtre (26) dans le canal d'évacuation (23) est positionné entre deux parois (7, 25) sensiblement parallèles faisant partie du canal, avec la section transversale du canal du côte du ventilateur ou soufflante (10, 11, 12) diminuant dans la direction de la sortie (24) tandis que celle du côté de la sortie augmente vers cette dernière.

7. Appareil de cuisson électrique comme revendiqué à la revendication 1, caractérisé en ce qu'il est muni d'un couvercle (6) comprenant une fenêtre d'observation (20) exhaussée avec des ouvertures (21, 22) entre sa surface et celle du couvercle.

8. Appareil de cuisson électrique comme revendiqué à la revendication 1, caractérisé en ce qu'il est muni d'un couvercle (6) comprenant, du côté opposé à l'entrée (8), une ouverture (5) pour la poignée (4) d'un panier (3) positionné de façon mobile dans le récipient.

A_B

FIG.2

FIG.1

FIG. 3

C-D

FIG. 4

E-F